# EUROPEAN PATENT SPECIFICATION

(11) **EP 1 026 978 B1**
(45) Date of publication and mention of the grant of the patent: **29.01.2003**
(21) Application number: 98949158.4
(22) Date of filing: 27.10.1998
(51) Int. Cl.: A47J 43/042, A47J 31/40

(54) **METHOD OF BLENDING FOOD AND FOOD BLENDING APPARATUS**
VERFAHREN ZUR VORBEREITUNG VON NAHRUNGSMITTELN SOWIE MISCHGERÄT FÜR NAHRUNGSMITTEL
PROCEDE DE PREPARATION D'ALIMENTS AINSI QUE MELANGEUR D'ALIMENTS

(30) Priority: 29.10.1997 GB 9722711
(43) Date of publication of application: 16.08.2000
(60) Divisional application: 02024144.4
(73) Proprietor: McGill, Shane Robert, Addington, West Malling, Kent ME19 5TW (GB)
(72) Inventor: McGill, Shane Robert, Addington, West Malling, Kent ME19 5TW (GB)
(74) Representative: Cowan, David Robert
(86) International application number: GB9803193
(87) International publication number: WO99021466

(56) References cited:
- EP-A- 0 562 310
- DE-A- 3 046 157
- DE-U- 8 915 094
- FR-A- 1 565 187
- US-A- 4 889 248

## Description

This invention relates to food blending apparatus and to a method of blending food within a container. The invention has particular application to milk shakes but can be used with other food products which need to be blended, particularly those which need to be dispensed ready for consumption in retail premises.

Hitherto milk shakes have been produced by manually placing ice cream, milk and flavouring into a blender jug into which a blender is inserted to produce the blended milk shake. The milk shake is then poured into a receptacle from which the customer consumes the product. The blender jug then has to be cleaned and sanitised for re-use. However, in the present fast food market there is a demand for a better system for producing milk shakes taking account of health regulations, labour costs, waste, product quality and the level ofskill of the operator. Current milk shake systems provide for improved pasteurisation but such systems are more expensive and more complicated. Moreover some of such systems are limited in the flavours which can be produced.

FR-A-1 565 187 is directed to the preparation of a beverage using a disposable, nestable container associated with a drive means for driving a liquid agitator placed in the container.

An object of this invention is to provide food blending apparatus and a method of food blending which overcomes problems with existing systems.

According to the invention a method of dispensing blended food products such as milk shakes in disposable containers having integral blending means located internally of the container, which blending means is drivingly connectable to drive means externally of and separate from the container, wherein the container is made and nested with other containers, the container is de-nested, charged with product ingredients at a charging location remote from a dispensing location, the container is sealed to seal the ingredients within the container, the container and its contents are cooled to at least a serving temperature, at the dispensing location, the blending means is releasably drivingly connected to said drive means, and the drive means is actuated to cause the blending means to operate and blend the ingredients within the container, access is gained to the blended food product within the container whereby to consume said blended product from the container, and the container is disposed of.

Preferably the container is charged with ingredients at the charging location at which containers are de-nested from one another.

Conveniently each container has an upper open end in which another container is nestably locatable and, after de-nesting containers, the open end of the container acts to receive the product ingredients, said open end being sealingly closed after charging the container with said ingredients. Sealing may be by applying a heat sealed closure, by the use of a snap-on lid, or both according to the temperature at which the filled container is to be stored and transported.

In one arrangement the container has a lower end in which the blending means is located and access to the blending means is sealed at said lower end with removable sealing means.

According to another aspect the invention provides a container for use in the method of the invention as defined in independent claim 10.

Conveniently said vessel is of circular cross-section tapered towards one end whereby to locate and nest two or more vessels inside one another, the narrower end of each vessel being insertable inside the wider upper opening of another vessel.

The rotatable element and the associated coupling means may be located on the lid or at the base of the container remote from the lid. When the rotatable element is in the lid, the container is usually inverted for engagement with the drive means.

If the rotatable element is located in the base of the container, the container is usually located in an upright position during engagement of the drive means.

The drive means is conveniently incorporated into a support for the container on which the container is located during blending of product within the container, the support incorporating the drive means and its associated prime mover. The support may be located within a refrigerated cabinet. There may be included means for feeding containers to a blending position which can be initiated by coin freed means for self service.

The blending means is arranged to cause product in the container to be blended upon rotation thereof and is conveniently located centrally of the container and has outwardly directed portions extending from the axis of rotation.

According to a further aspect the invention provides food blending apparatus as defined in independent claim 21.

Preferably the seating has a portion shaped according to the external shape of the container whereby supporting the walls of the container during blending.

The components of the container, its sealing member and the rotatable blending element are conveniently of plastics material so that these components may be disposed of after the food product has been consumed. Moreover the container may be supplied for use containing food product to be blended. Thus this enables pre-filled containers to be supplied from a source, such as a factory, already filled with product ready for use by a retail outlet in a variety of food compositions and flavours, thus obviating the need for the retail outlet to store product for filling into the containers. In addition, due to the nature of the apparatus, food product cannot come into contact with associated apparatus before and during blending. Nevertheless the blended product is readily accessible by the user. Hygiene problems are overcome by this approach whilst still giving the opportunity for a wide range of products to be sold.

The filled containers may be supplied with components of the product layered within the container in horizontal or vertical layers, the blending process bringing about the desired blended product. If desired it is also possible for the product to be aerated within the container in addition to a blending process. Alternatively aeration of product may be achieved before feeding product into the container. As a further option the containers may be kept cold and/or ice may be present or introduced into the container to be incorporated into the blended product.

By the provision of containers filled with product and incorporating as part of the container a rotatable blending element full blending is obtained and there is no sanitising or hygiene problem. The container assembly can be made cost effective by the use of plastics components even though the container may only be used for one serving of product.

Further features of the invention will appear from the following description of various embodiments of the invention given by way of example only and with reference to the drawings, in which:
Fig 1 shows a vertical section through a food blending container for use with food blending apparatus, the lid part of the container being shown disassembled in the upper part of Fig 1,
Fig 2 shows the container associated with a support and drive arranged for a blending process,
Fig 3 is a scrap vertical section showing an optional feature of the container of Fig 1,
Fig 4 is a vertical cross section through blending apparatus with a container in another embodiment,
Fig 5 is a plan view of a closure for the container of Fig 6,
Fig 6 is a vertical section showing the closure of Fig 5 on the container of Fig 4,
Fig 7 is a vertical section through apparatus for feeding containers, according to Fig 4, to blending stations,
Figs 8 and 9 show vertical cross-sections through a container showing different product locations prior to blending,
Fig 10 shows a vertical and a horizontal cross-section through a container showing further product locations within the container prior to blending,
Fig 11 is a side elevation in vertical section through food blending apparatus prior to use,
Fig 12 is an elevation corresponding to Fig 11 in the operative blending position,
Fig 13 is a side elevation in vertical section through other food blending apparatus prior to use,
Fig 14 is an elevation corresponding to Fig 13 in the operative blending position,
Fig 15 is a vertical section through a blending container as used in the apparatus of Figs 11-14,
Fig 16 is a vertical cross-section through another embodiment of blending container,
Fig 17 is a plan view of the blending element of the Fig 16 embodiment,
Fig 18 is a side view of the element of Fig 17,
Fig 19 shows a blending container associated with a jug,
Fig 20 shows in cross-section the jug of Fig 19, and
Fig 21 shows an inverted blending container associated with a jug.

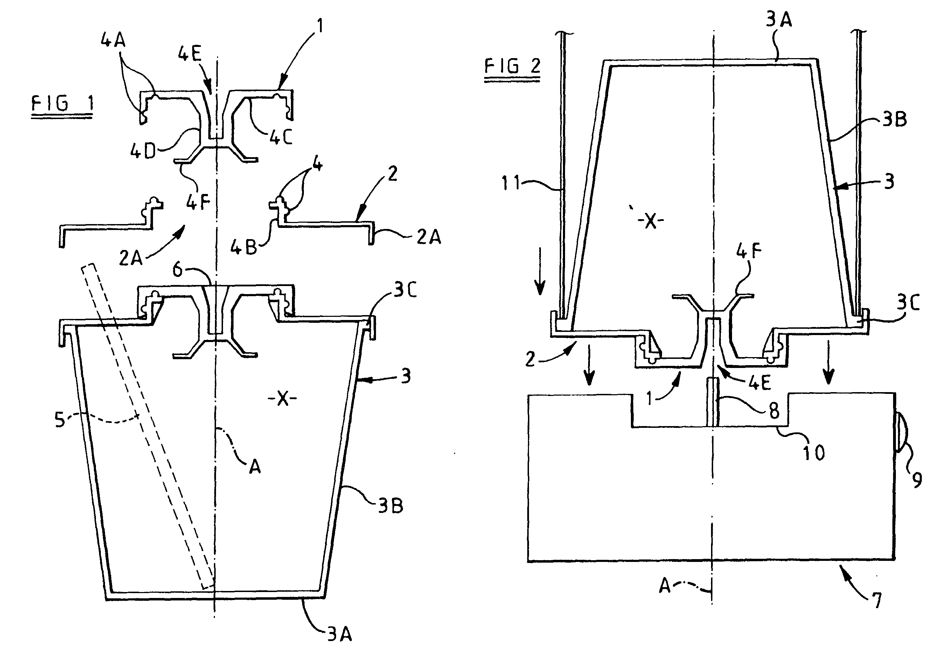

Referring to the drawings and firstly to Fig 1 there is shown a container for use in blending apparatus which comprises a body portion 3 consisting of a plastics vessel in the shape of a beaker having a base 3A, upwardly diverging, circular cross-section side walls 3B and an upper edge 3C of the container 3 with an outwardly directed lip. The container is nestable with other containers by location of the base through the upper opening of another container

The container body or vessel 3 is provided with a closure member 2 constituting a lid arranged to fit over the upper end of the body 3 and to close the opening at the top of the body. The lid 2 is generally circular having an outer portion 2A which fits over the upper end 3C of the body 3 to be sealingly engaged over the opening. This may be by a clip arrangement, by heat sealing, or by any other suitable means for securing the lid 2 on the body 3.

At the centre of the lid 2 is formed a rotatable blending element or impeller 1 sealingly carried on the lid 2 but for rotation relative thereto about the axis A of the container. The blending element I is retained on the lid by circular retaining portions 4 formed on the lid 2 which engage in corresponding circular grooves 4A formed in the member 1. The retaining portions 4 are formed on an upstanding, inverted L-shaped portion 4B of the lid 2 which extends around a central opening 2A formed in the lid 2. Other means may be used to obtain seals but which also permit relative rotation between the element 1 and its support.

The blending element 1 fits over the circular L-shaped member 4B by the provision of a correspondingly shaped portion of the element 1 which extends inwards over region 4C towards an integral impeller portion 4D which extends downwards into the body of the container and defines a hollow central portion 4E shaped to be engageable by drive means, to be described. At the lower end of the impeller portion 4D is formed an outwardly directed impeller member 4F which, in this case, is a downwardly inclined and outwardly directed shaped member. In practice the impeller member 4F is shaped to give the desired blending action to product within the product space X within the assembled container according to known practice. Thus, for example, the impeller member may have inclined surfaces to help to generate a vortex within the product in space X, or there may be individual arms extending outwardly from the axis with or without inclined surfaces. Alternatively the impeller member may give a gentle mixing action, in which case the impeller may comprise a disc.

A removable diaphragm 6 may be provided on the rotatable member 1 for releasable location closing the opening 4E. The purpose of the diaphragm 6 is to seal the container during transit, the diaphragm 6 being removable prior to placing the assembled container with product on associated apparatus whereby the product within the container is blended. The diaphragm may be heat sealed to the lid 2 and, instead of removable, it may be pierced by drive means 8 for rotating the element 1.

As will be seen from Fig 1 the lid 2 may be formed with a sealed opening through which a straw 5 may be inserted, after blending, to enable the product to be drawn out of the container with the straw. The straw 5 may be inserted through an existing opening or through a weakened area of the lid 2 to gain access to the product, in known manner. Alternatively access for the straw may be through an opening covered by a removable diaphragm or through a moulded tube of which a closed end may be removed for access by the straw. Alternatively the lid 2, together with the associated rotatable blending element 1 is removable, after blending, to gain access to the product within the container body 3 after blending.

Referring now to Fig 2, the container of Fig 1, after assembly and with product within the container, is inverted, as shown, to effect a blending action. In Fig 2 there is shown a housing 7 which acts as a support for the container and which houses a drive motor (not shown) from which is directed a drive shaft 8. A stop-start switch 9 is located on the housing 7 to actuate the drive motor and drive shaft 8, or the motor may be started by a proximity or pressure switch operated by location of the container on the support.

The drive shaft 8 is arranged to drivingly engage the opening 4E of the rotatable blending element 1 so that as the drive shaft 8 is rotated it rotates the element 1 to blend product within the container. The drive shaft 8 is located to extend from a recessed portion 10 of the housing 7, the recessed portion receiving the rotatable element 1 for rotation with the drive shaft 8 and the upper surface of the lid 2 being supported on the upper surface of the housing 7 around the recess 10. The container is retained on the housing 7 by a locking tube 11 which surrounds the container body 3 and moves reciprocally to engage with the lip 3C of the body 3 during a blending operation.

Thus it will be seen that the container is held in position by the tube 11 with the container seated on the housing 7, the product is blended by operation of the drive shaft 8 to rotate the element 1 and cause product within the space X to be mixed, aerated (if necessary) and blend the different components of the product thereby forming a blended product in the desired manner.

After the product is blended the tube 11 is withdrawn from engagement with the container and to permit the container to be removed from the housing 7 ready for use and consumption.

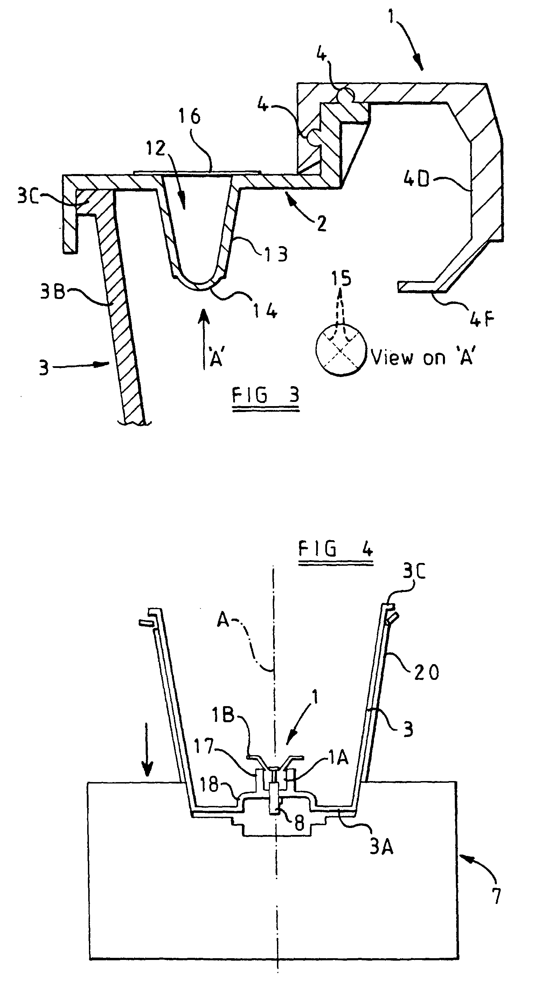

Referring to Fig 3, there is shown an optional feature of the container of Figs 1 and 2. In this arrangement a portion of the lid 2 between the member 1 and the edge of the lid is formed with a circular opening 12 from which inwardly extends a depression 13 at the lower, inward end of which is formed a closure 14 which includes weakened portions as seen at 15 in the scrap view A of Fig 3. The opening 12 may be sealed by a diaphragm 16 over the upper end of the opening, the diaphragm being removable by peeling off or otherwise.

The purpose of the opening 12 in the lid 2 is to give access into the container for a nozzle through which pressurised gas may be injected into the product. The nozzle (not shown) may be inserted through the base of the opening 12 breaking the frangible or weakened areas 15 in said base of the container or by the base being open and being normally sealed with a diaphragm at its upper end. By this means contamination of the nozzle is avoided or minimised. Alternatively the nozzle can seal with the side walls of the depression 13, the pressure of the gas breaking open the portion 14 by breaking through the weakened lines 15. The diaphragm 16 provides added security to prevent product escaping through the opening 12. Another opening in the lid may be provided for releasing pressure in the container, for example if it exceeds preset levels. An exhaust gas nozzle may be introduced through said further opening

It will be seen that the opening 12 is offset from the centre of the container but, if desired, the opening may be central with the impeller 1 offset to one side of the axis A.

Referring now to Fig 4, there is shown blending apparatus similar to that of the previous embodiment except that in this case the rotatable blending element or impeller 1 is located in the base 3A of the container body 3. Thus the container comprises a container body or vessel 3 of similar shape to that previously described with an outwardly directed lip 3C and a base 3A. A rotatable blending element 1 is located centrally of the base 3A and is supported sealingly in relation to the base for rotation about the axis A. The element 1 has a central body 1A having a lower opening shaped to drivingly receive a shaft 8. The shaft 8 is drivingly connected to a drive motor (not shown) located in a housing 7.

The element 1 includes upwardly inclined and outwardly directed impeller elements 1B which are arranged to cause product within the container to be blended by the mixing of product within the container, sometimes by creating a vortex of product.

The body 1A is sealingly located for rotation relative to walls 17 formed integrally with the base 3A and extending upwardly from a dished portion 18 in which is formed an opening for gaining access to the element 1 by the drive shaft 8. Suitable seals (not shown) are provided for enabling the element 1 to rotate within the walls 17 whilst maintaining a seal against the flow of product from the container.

In Fig 4 the container is shown in a blending position in the housing 7, the base 3A being seated on the housing. The sides of the container body are, as shown, located within a correspondingly shaped, outwardly diverging receiving member 20 which may be heated.

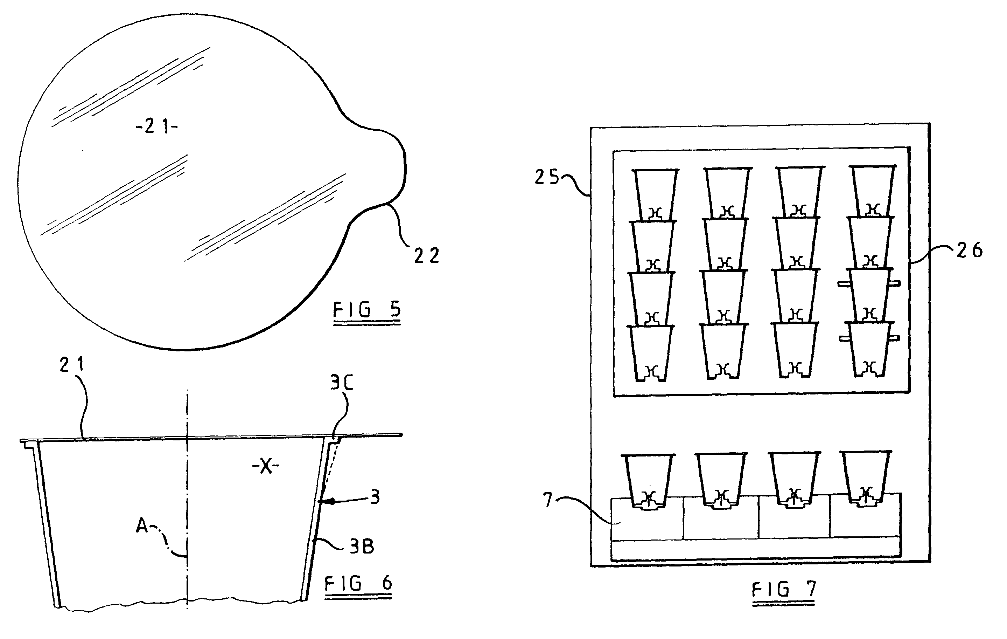

As shown in Fig 6 the upper end of the container of Fig 4 may be sealed by a diaphragm 21 which is sealingly secured to the upper end of the container body by heat sealing and which may be peeled off by use of a tab 22 extending to the side of the container which, when not in use, may be laid down the side of the container. After removal of the diaphragm 21 a lid (not shown) may be applied to the container. Alternatively the diaphragm may remain in place and a lid with a protrusion to puncture the diaphragm may be applied to provide an inlet for a straw.

With the arrangement described in relation to Figs 4, 5 and 6 the location of the blending element 1 in the base of the container 3 may not always lend itself to accessing product within the container, especially when a spoon is to be used. In such a case the container version when the rotatable element is in the lid may be preferred, as in the embodiment of Fig 1.

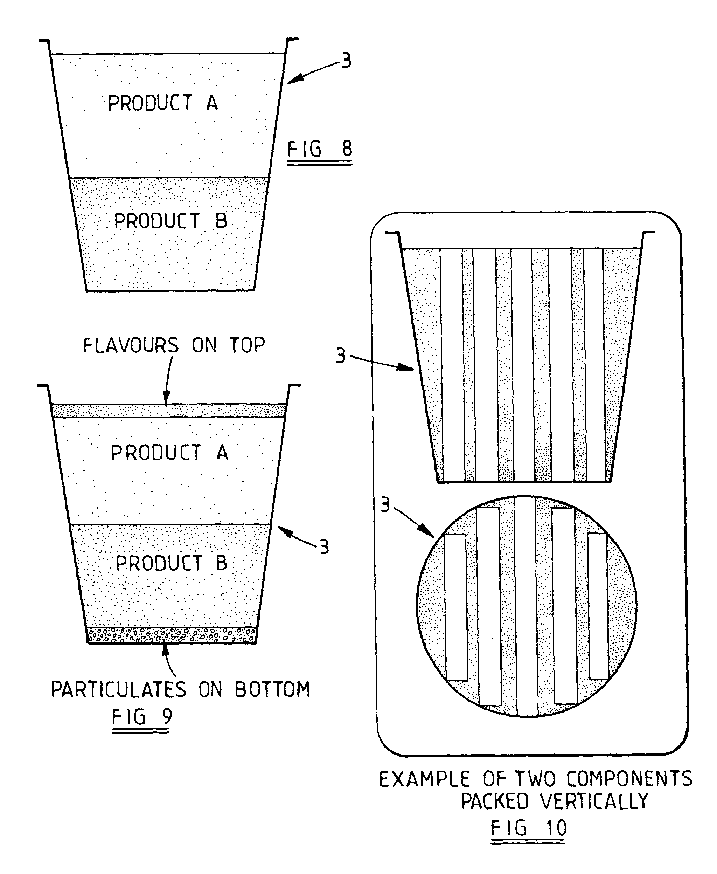

Product to be blended in the container can take a variety of forms but generally consists of two or more components for example dairy fat, sugar, emulsifiers, stabilisers, milk, flavouring, ice etc. These components may be pre-filled into the body 3 of the container at a central location or can be filled at the place of consumption. In either case the component products may be layered as shown in Figs 8, 9 and 10. In Fig 8 a two component product is illustrated in which one component is located in the lower part of the body 3 and the other component in the upper part. In Fig 9 there is a similar arrangement except that a further component is layered onto the top of the container, for example a flavour component. In the base of the container is located another layer of component, for example particulates such as nuts. Alternatively there may be a single product in which ice may have formed as crystals within the product. Blending can be used to break down the crystals into small ice particles. Moreover blending may be of a single product of which a blended consistency is required. In some cases product does not occupy the entire container when filled to allow for aeration and expansion of blended product in the container.

In Fig 10 is shown another arrangement in which components are located within the container in vertical layers. This may be by filling the container from a dispenser in such a component array.

Referring now to Fig 7 there is shown a blending apparatus, in this case incorporating containers of the kind shown in Figs 4, 5 and 6. In this apparatus there is an outer housing 25 in the base of which is located a plurality of side by side motor housings 7. In an upper storage housing 26 is located vertical stacks of filled containers for access by the operator. Containers, filled with product, from the housing 26 are released from the stacks for location on the motor housing 7 for blending purposes and each of the stacks may have containers with different product formulations so that a choice of, in this case, four different product formulations may be available for blending and dispensing.

There are various other aspects of this invention which can be adopted amongst which is that the operation of the blending action can be timed to provide a blending action for a predetermined period, and the operation of the locating means for the containers can also be timed to match the duration of blending.

Instead of the lid being removable for access to product, or the use of a straw to access product, the lid may have a portion which can be torn off to give access to the product. Moreover the lid may be removable to insert additives into the product prior to or after blending. For example if the apparatus were used for cocktails with an alcohol content the alcohol can be added before, during or after blending.

The containers may be filled with product and supplied to the user without the lid being fitted to the container and with a simple peel-off or tear-off cover. This allows the lid and associated blending element to be fitted at the point of sale prior to blending, or when serving. The blending elements may be constructed to allow the elements to be nested one inside the other to provide minimum volume during shipping and also to permit handling on automatic machinery.

The motor housing may have more than one drive shaft extending therefrom to permit several containers of product to be blended at the same time.

Instead of the arrangement of Fig 7 other automatic feed arrangements can be used for transporting containers from a refrigerator or freezer; the containers being moved into position onto static drive arrangements or, alternatively, the drive shafts may be mounted for movement along a linear or rotary path into position for the containers. Similarly the blended containers can be moved from a blending position along a conveyor or other transport means.

For efficient blending of the product its viscosity should allow a vortex to be formed inside the container whilst the product is being blended or liquid may be added at blending. When multiple components are included in the product they may be deep frozen for ease of distribution and storage. The product may then be placed in a tempering cabinet, held at a specified temperature, to warm the product up to the required blending temperature which may be between +5°C and -10°C dependent on the type of product. Once the blending temperature has been reached inside the tempering unit the components will have different consistency. Thus one element may be a liquid of low viscosity to act as the vortex catalyst during blending whilst another component contains other products and solids required in the final product. It may be advantageous to have the low viscosity component located in the container adjacent the impeller so that this liquid is in direct contact with the rotary blending element during the blending process. A single component may be fed into the container which separates into two or more components during storage and prior to a blending operation.

The components of the product can be extruded into the container, they may be fed by volume using piston and cylinders, or they may be fed by time lapse arrangements or by other means. A different filling station will usually be required for each component of the product and air may be introduced into the product during the processing and filling stage. Similarly flavouring liquids can be included in the container as a separate component at the blending stage rather than introducing the flavoured components when the container is packed. Moreover particulate components may be added with low water content components to achieve the best conditions for blending.

Addition of components may also be conducted shortly before the blending operation and these components may be introduced through an opening in the container lid, for example the opening for the straw, either manually or automatically.

The material from which the container body 3, lid 2 and rotary element 1 are made will usually be plastics material, preferably being recyclable plastics. The various parts of the container may be made by injection or thermo moulding and the container will be of thin walled plastics to suffice for a single use requirement and disposal after use.

The motor driving the blending operation may have means for detecting the driving torque to ensure that the maximum torque applied does not exceed a pre-set level. This would ensure that where the product within the container is of the incorrect consistency (perhaps due to being the wrong temperature) blending cannot occur since the rotary element may be unable to withstand the forces involved. However the rotary element should be made of material which will not fracture but will distort if overload should occur. In addition the connection between the drive shaft and the rotary member may be such that, if excessive forces are applied, the opening in the rotary element will distort and allow freewheeling of the drive shaft. In addition the torque on the impeller or the current to the drive motor can be detected to determine the viscosity of the product during blending. This enables the motor to operate until the blended product reaches the desired viscosity.

The lid 2 may be heat sealed to the container body 3A to effect a permanent connection and in this case the lid may have a peel-back or tear-off portion to allow the product to be poured out of the container. This arrangement would be particularly appropriate for products such as frozen cocktails. Moreover the product may be consumed direct from the container.

The containers with at least part of the product contained therein may be kept at ambient temperatures without the need for refrigeration, especially if UHT products are used and the container is kept in a sterile condition. The container is kept in a sealed condition, cooled and the seal removed for use with the possible addition of low temperature or other product before dispensing. The low temperature product may be ice, cold liquid, or both and, after blending, a chilled or frozen dessert may be provided.

The apparatus of the invention may be used for cold or frozen products but can also be used for products at ambient or higher temperatures, such as hot chocolate, custard, sauces, mashed potato, tea, coffee etc. For this purpose the blending operation may be performed in an environment in which a microwave heating facility can operate.

Instead of the containers being filled remotely from the point of sale, filling can take place at or close to the point at which blending takes place. Freeze dry components, liquids and ice can be added at point of sale, the lid then being fitted and the product being blended and served to the customer. Feeding of components of product into the container may be manual, semi-automatic or fully automatic. When ice is used, such as crushed ice, the rotary member can break down the ice to a suitable size for the product. Moreover other cooling material such as frozen carbon dioxide, or carbon dioxide 'snow' produced from liquid carbon dioxide, can be inserted into the container for mixing and chilling the product before or during blending.

Compressed gas such as carbon dioxide may be used for chilling product and carbonated drinks may be produced by injecting pressurised carbon dioxide gas before or during blending of the product. A temperature detector may be employed to control the amount of chilling required.

In the blending apparatus described thus far it is intended that the container, its lid and the rotary member be disposable after blending and consumption. However a non-disposable, re-usable rotary element may be employed which is fitted to a lid which is applied to the container during blending. The rotary element would be easily removable from the drive for cleaning after use and may be formed of more durable material, such as metal components, cleanable in dishwashing apparatus.

The motor for driving the rotary element may be powered by batteries, the usual electricity supply or by air motor, the latter being from a compressed air reservoir or otherwise.

If the product to be blended needs to be heated steam injection or hot water addition can be used.

If different sized containers are required common components can be employed for the lid and rotary element assembly with the container being of different depths. In this way the customer can be offered a full range of sizes without difficulty.

If it is desired to have chilled or partly frozen product, the containers with product may be kept at a low temperature such, for example, as to form ice crystals inside the container which are then blended with the product during the blending stage. Moreover by chilling or freezing the product close to the point of sale using suitable product components, the filled containers can be transported at normal ambient temperatures, then chilling or freezing the product upon arrival at point of sale.

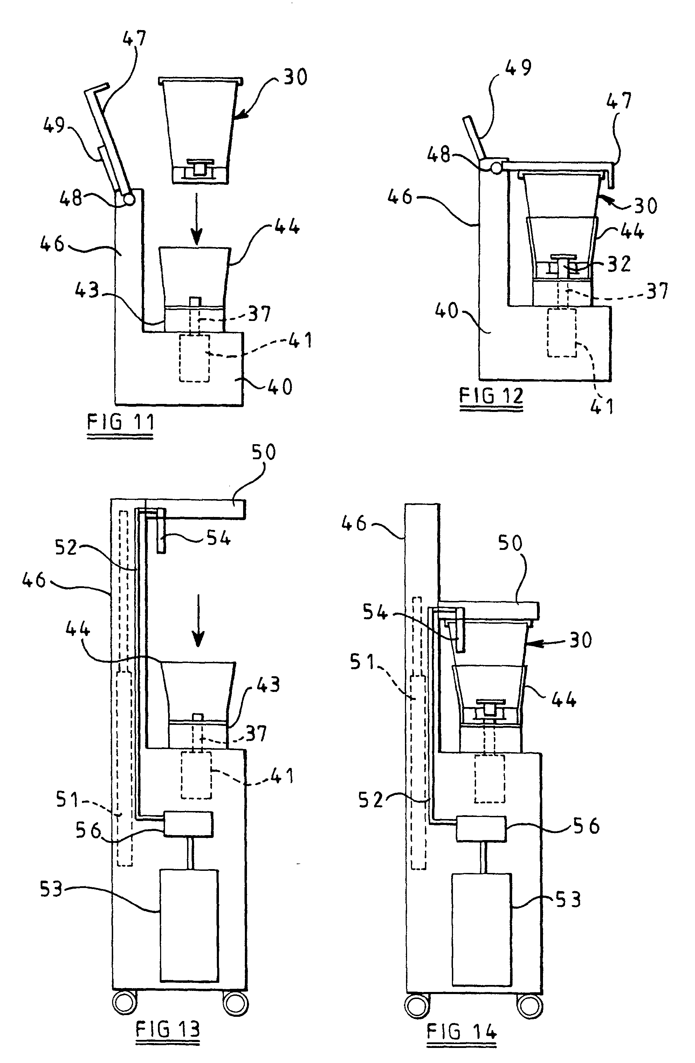

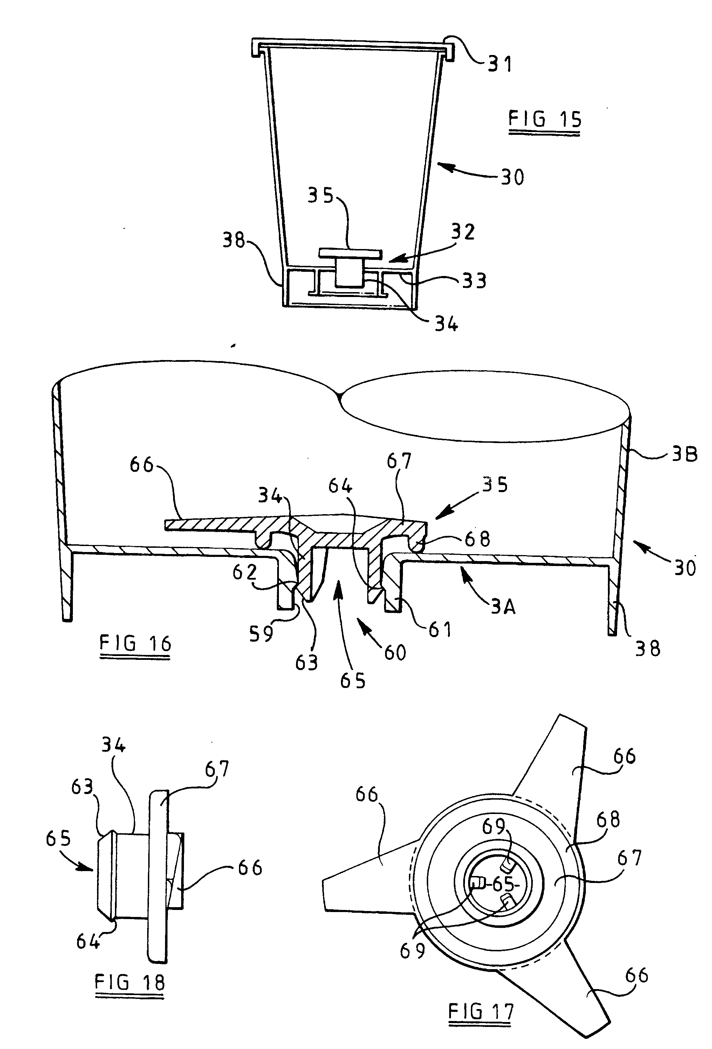

Referring now to Figs 11-15 and firstly to Figs 11 and 12 there is shown an alternative blending apparatus using containers 30 such as shown in Fig 15.

In Fig 15 the container 30 shown is, in common with the previously described container, formed of thin-walled plastics and is of circular cross-section tapering from its lower end upwardly so that containers are nestable, one inside the other, with the lower end of one container inserted into the upper open end of another container, when empty.

The container 30 is shown with a lid 31 or other sealing member over its open end and the lid is preferably heat sealed to the open end after filling with product, usually filling to a position spaced from the lid to allow for the product to occupy the full space within the container after blending. Alternatively or in addition a membrane is fitted to the open end and secured by heat sealing.

Towards the lower end of the container is a blender 32 journalled into a base portion 33 of the container and having a shaft 34 and a blending element 35. The shaft has at its lower end means (not shown) for placing a drive shaft 37 in driving engagement with the blender 32 and its associated shaft 34. Conveniently drive is through a dog engagement so that the container is placed in position for blending without any twisting action being necessary to secure driving engagement. The shaft 34 projects into an inner skirt portion the lower end of which is usually closed during transit by a membrane heat sealed to the lower end, especially when aseptically prepared product is employed.

Extending below the level of the base portion 33 is a skirt portion 38 projecting below the level of the shaft 34 and defining at its lower edge, a base on which the container stands.

The container 30 is intended for use with the apparatus of Figs 11 and 12 or Figs 13 and 14 by which a container 30, charged with product, is placed on the apparatus and the product is blended for consumption. In Figs 11 and 12 the apparatus comprises a mounting base 40 in which is located a drive motor 41 directed upwardly from which is a drive shaft 37 for driving engagement with a shaft 34 of the blender 32.

Above the base 40 is a mounting platform 43 formed with an upwardly extending seating 44 shaped to receive the container 30 as a close fit and terminating short of the upper end of the container 30 when placed in the seating. Thus for a blending operation the container 30 is placed in the seating 44 whereby the drive shaft 37 is engaged with the blender shaft 34 of the container.

Extending upwards from the base 40 is a vertical support member 46 which has at its upper end a pivotable arm 47 pivoted about axis 48 between the position of Fig 11 and that of Fig 12 which is a container access position and a container secured position respectively. In the latter position the arm 47 has been lowered to engage the upper end of the container 30 to secure the container for a blending operation. The arm 47 may be powered between said positions and include a proximity switch so that blending cannot occur unless the arm is in the container secured position. Alternatively the arm 47 is gravity operated. In this case the arm 47 in the Fig 11 position is supported by support 49, and is manually moveable about the axis 48 to lower under gravity to the Fig 12 position. A catch or other location means (not shown) may be provided to prevent unintended movement from the Fig 11 position.

The base and in particular the seating 44 may have heating means whereby the seating 44 is heated to heat the wall of the container 30 when the container is placed in the seating. Such heating may be advantageous in obtaining adequate blending especially when product within the container is frozen and has a tendency to become attached to the inner wall surface of the container.

The drive motor 41 may be a variable speed motor, such as DC motor, to permit different operational speeds for different products. Moreover the motor may be controlled to operate for different preset periods according to the product. These features may also be applied to the other versions of the apparatus described.

Referring now to Figs 13 and 14 similar apparatus is shown to that of Figs 11 and 12 and the same reference numbers are applied to similar parts. Fig 13 shows the apparatus ready to receive a charged container 30 (Fig 15) and Fig 14 shows the apparatus in an operational blending mode.

In the embodiment of Figs 13 and 14 the apparatus has injection means for injecting carbon dioxide or other material into the container prior to, during, or after blending. This may be for carbonation of the food product in the container or for cooling of the product. Carbonation may be appropriate for products comprising ice and liquid. Cooling may be appropriate for cooling or freezing product in the container by injecting, for example, carbon dioxide snow into the product.

The container used in the apparatus of Figs 13 and 14 may have its lid removed but with a flexible diaphragm seal remaining in place which seal can be punctured to inject into the product, or there may be a lid with a frangible opening for injection there through.

Instead of the locating arm 47 of Figs 11 and 12 the apparatus of Figs 13 and 14 has a powered restraining plate 15 which is moveable up and down between a securing position (Fig 14) and a non-securing position (Fig 13) by a piston and cylinder device 51 located in the member 46. An injection tube 52 also extends along the member 46 and communicates with a reservoir 53 container carbon dioxide or other material. The tube 53 has an outlet 54 carried on the plate 50 and directed downwardly so that when the plate 50 is lowered towards a container 30 the container is located by the plate 50 and the outlet 54 enters the container for the injection of material into the container.

There may be proximity switches to prevent movement of the plate 50 if the operator has his hands in the region of the plate. In addition there may be a housing (not shown) around the apparatus with access through a door. Provision may be made so that the door must be closed before the apparatus can operate.

The outlet 54 is preferably formed of metal tube having a sharpened end so as to be able pierce the membrane or other seal over the container. The outlet 54 may be withdrawn into the plate 50 when injection is not required.

A control valve 56 is provided in the line from the reservoir 53 and the tube 52 is flexible to accommodate the up and down movement of the plate 50.

The injection arrangement described may be used to heat up the product in the container 30, for example by injecting steam or hot water from the reservoir.

Referring now to Figs 16-18 there is shown another embodiment of blending container generally designated 30 in which the same reference numbers are used for similar parts in the previously described embodiments. Thus the container has a body 3 with a base 3A, upwardly diverging circular cross-section side walls 3B and blending means or an impeller 35. The container has a closure member (not shown) for sealing the upper open end of the container when filled with product. As before the container body is arranged to be nestable in other containers by location of the lower narrow end of the body within the upper open end of another container, when empty.

The lower end of the container is formed with a depending skirt portion 38 and base 3A is formed with a central opening 60 downwardly from which extends walls 61 defining a cylinder 59 of which the internal surface has a shoulder 62 and provides bearing surfaces for the blending element 35.

The blending element 35 is of injection moulded one-piece plastics construction and includes a shaft portion 34 and blending portions 66. The shaft portion 34 is formed with a tapered profile 63 at its free end and a lip 64 behind the wider end of the taper which is arranged, when assembled with the container, to engage behind the shoulder 62 of the opening 60.

The shaft portion 34 is hollow and defines a recess 65 for receiving a drive shaft (not shown) of the drive means in driving connection with the element 35. For this purpose the opening 65 has three axially extending ribs 66 or drive dogs for engaging corresponding slots in the drive shaft.

The blending portions 66 each comprise generally radially extending blades set at 120° from one another about the rotational axis of the element 35, the blades being of relatively sharp profile at their leading edges, as seen in Fig 18, tapering outwardly in the rearwards direction.

The portions 66 extend outwards from a central disc portion 67 extending at a right angle at the axis of rotation. Towards the radially outer edge of the disc portion 67 is formed an annular downwardly projecting portion 68 which is arranged, when the element is in position in the container 30, to engage the upper surface of the base 3A.

Assembly of the element 35 with the container is by inserting the shaft portion 34 into the opening 65 and pressing it in until the lip 64 engaged with the shoulder 62 at which position the annular portion 68 engages with the base 3A and the element is securely located in the container for rotation relative thereto.

The contacting surfaces of the element 35 and the container provide bearing surfaces during rotation. In order to improve the bearing quality of such surfaces there may be applied to the element 35, before assembly, lubricant over the relevant surfaces. However it should not be necessary to provide any seals between the bearing surfaces.

The arrangement of Figs 16-18 provides a simple but effective means for making and assembling the blending element and the associated container body. Since the blending element only has to perform a single blending operation of, for example, 4-60 seconds duration, albeit usually at high speed, it does not have to have the durability resulting from the need for repeated use. However the element should not break if subjected to excessive force due, for example, to the product in the container being frozen. The element should have sufficient flexibility to bend if the torque requirement for blending becomes excessive. In some arrangements it may even be desirable for the blending element to fuse with the container after a blending operation in order to prevent further use.

The lower end of the cylinder 59 is usually sealed with a heat sealed membrane for transit of the filled container and the membrane is removable or pierced before connection to the drive shaft.

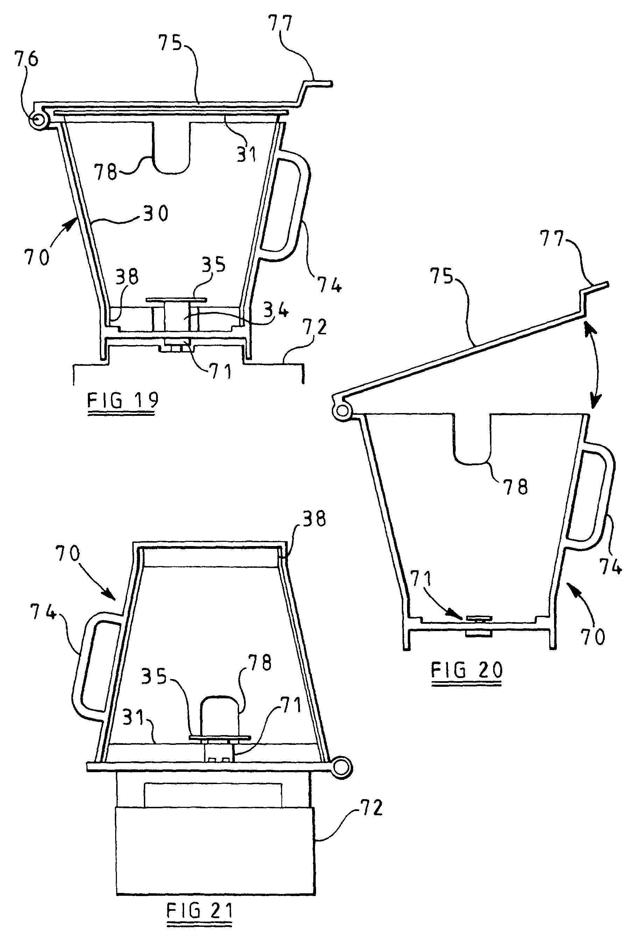

Referring now to Figs 19,20 and 21 there is shown an assembly of blender container 30 with a jug 70, seen separately in Fig 20. In this arrangement the blender container 30 may be generally of a similar form to the previously described embodiments. In Figs 19 and 20 the illustrated container 30 is of the kind shown in Fig 15. In the arrangement of Fig 21 in which the container is located in an inverted position during blending, the blender 35 is associated with the lid 31 of the container. In Figs 19, 20 and 21 the reference numbers used are the same as for the preceding embodiments in relation to similar parts.

The container of Figs 19 and 20 is associated with a jug 70 in the base of which is a coupling element 71 by which drive is transmitted from a drive mechanism in a base unit 72 to the blender 35, which drive mechanism may be as previously described. Alternatively the drive mechanism may be provided by a conventional blender drive unit.

The coupling element 71 provides coupling between the output from the drive mechanism and the blender shaft 34 and may include a clutch mechanism whereby the coupling does not transmit drive if the torque required to drive the blender becomes too great due, for example, to the product in the container having too viscous a constituency, possibly due to its being frozen.

The jug 70is mounted removably or pivotally on the base 72 and the blending container 30 is removably located within the jug 70 so that its drive shaft drivingly the locates with the coupling element 71 of the jug when in position. The jug 70 has a handle 74 at one side and a lid 75 or cover pivoted towards one side at 76, and a lifting extension 77 to the opposite side to the pivot 76. By this arrangement the lid 75 is raised to give access to insert and remove the container 30.

The jug 70 also has a slot 78 or slots along its upper edge to enable the container 30 therein to be removed from the jug after blending.

In this arrangement the jug 70 provides a holder for the container during blending with a closure in the form of the lid 75, and the jug 70 is removable from the base 72 for cleaning. The jug 70 may also be used to remove the container 30 by lifting them together by use of the handle 74. The jug may be heated by the provision of heaters within the jug to thereby heat the container 30 prior to blending, if necessary.

In Fig 21 a similar jug 70 to that of the preceding embodiment is provided whereby an inverted container 30 with the blender 35 in the lid is admitted to the jug, the jug is inverted and a coupling 71 is located in the lid 75 of the jug. In this case the lid 75 is secured against opening by a releasable catch during inversion and blending.

The arrangement provides means whereby the container 30 can be blended using a conventional blender base, the coupling element 71 providing an adaptor for adapting the drive from the blender to the container blending element.

Aseptically prepared or sterilised containers provide considerable advantages in that the filled containers have a relatively long shelf life without freezing being necessary. In filling containers aseptically hot product may be used at pasteurising temperatures which assists in ensuring that the container and its contents are aseptically prepared. To ensure that the container thus filled is secure against any risk of the product being exposed to the environment the blender assembly should be fully sealed against ingress or egress of contaminants. For this purpose the blender assembly may be fully sealed at least until blending is to be performed. One way of achieving such a seal is to unite the assembly and the container body with a frangible weld between the rotatable plastics components and their housing, a seal being provided until torque is applied either manually or by the drive motor to the rotatable component. Alternatively the frangible weld may be broken by the use of a tool or by engagement with a tool member when the container is placed on the drive shaft. The frangible weld is located to seal the small gap between the cooperating surfaces provided between the rotatable component and its housing. In one arrangement a portion of the container is interposed between and connected to each of an input drive rotor part and an impeller part of the blender. Said container portion is connected to the main body of the container through a frangible connection which provides the seal between the interior and exterior of the container until the connection is broken. This conveniently occurs when driving torque is applied to the blender or otherwise, as previously described.

The frangible connection may be provided by an annular weakened region of thin section.

The drive motor part and the impeller part may each be drivingly connected to each other through said portion of the container by, for example, welding to the container portion. By this means the container portion becomes part of the rotatable blender when blending takes place and said container portion becomes disconnected from the container at said frangible connection. Other means, such as a sealing ring, may also be provided for this purpose.

Utilising the container and apparatus of the invention the equipment lends itself to a manufacturing, filling, transportation and dispensing system which has wide application in dispensing foods in a hygienic and cost-effective manner.

Normally the containers will be manufactured at a manufacturing site remote from a site at which the containers are charged with the product. The containers, being intended for disposal and recycling, should occupy little space during transport to a location at which the containers are to be charged. Hence the containers are nestable with each other, as described, the base of one container being located inside and adjacent the base of another container.

The containers, still nested inside one another, are located for filling by standard filling machinery and are de-nested just prior to, during, or after each is filled. After the containers are filled with food product they are sealed by applying sealing means over the upper filling opening. The sealing means is preferably a heat sealed lid or a membrane sealed onto the rim of the upper opening. Alternatively or in addition a clip-on removable lid is applied to seal the container. In addition the base of the container is sealed to prevent any communication between the internal contents and outside. Such a seal is usually a heat sealed membrane applied across the drive access in the base of the container and removable to gain access to drive the blender 32.

After filling and sealing the container, its contents can be cooled and frozen to a low storage temperature. Alternatively the container and its contents may be kept at ambient temperatures after filling. The latter would be appropriate when the containers, its contents and the environment are aseptically controlled and in this case membrane protection over the upper filling opening and the drive shaft should be provided. In this case the container and its contents can be transported without freezing but will usually need to be cooled below freezing point before the product is blended in order to obtain ice particles in the product and to obtain a product of the temperature required for consumption, especially if the product is milk shake. However, even with aseptically controlled product, freezing can be undertaken after filling, for quality control purposes.

Filled containers at frozen or ambient temperatures are transported to their place of consumption at which the product is to be blended. In the case in which the product is at ambient temperature during transport, cooling and, if desired, freezing will be undertaken prior to blending to provide a cold product, with or without ice in it, for consumption.

In the case in which the product is transported frozen it may need to be tempered to higher, but still frozen, temperature prior to blending. This may be done in a tempering cabinet, set at a tempering temperature, in which the containers are stored and warmed up to a dispensing/blending temperature.

When the product is to be consumed, the container is placed in the blending apparatus and blending is effected, as described. Blending may involve penetration or removal of the seal on the base to access the blender drive. Usually the upper opening remains sealed during blending except when injection into the container is required.

When blended the product is ready for consumption by piercing the seal or by removing the seal to gain access to the contents by a straw, spoon or by pouring, as required. After consumption from the container the empty container is disposed of. Disposal is cost-effective because the container is, by its construction, relatively cheap to make, even with the in-built blender.

It will be seen that the blending apparatus offers the opportunity of dispensing blended products in a quick, safe and hygienic environment with the possibility of filling containers at a remote location or of introducing the product component just prior to blending. The arrangement is cost effective and efficient.

## Claims

1. A method of dispensing blended food products, such as milk shakes, in disposable containers (3; 30) having integral rotary blending means (1; 35) located internally of the container, which blending means is drivingly connectable to drive means (8; 37; 41) externally of and separate from the container; wherein the container is made, then nested with other containers and transported to a charging location; the containers are de-nested, charged with product ingredients at the charging location remote from a dispensing location; the container is sealed to seal the ingredients within the container, the container and its contents are cooled to at least a serving temperature, the blending means is releasably drivingly connected to said drive means at the dispensing location, and the drive means is actuated to cause the blending means to operate and blend the ingredients within the container, access is gained to the blended food product within the container whereby to consume said blended product from the container, and the container with its blending means disposed of.

2. A method according to claim 1 wherein each container has an upper open end (31) in which another container is nestably locatable and, after de-nesting containers the open end of the container acts to receive the product ingredients, said open end being sealingly closed after charging the container with said ingredients.

3. A method according to claim 1 or 2 wherein the container has a lower end in which the blending means is located and access to the blending means is sealed at said lower end with removable sealing means (2).

4. A method according to any one of the preceding claims wherein the container is partially filled with food product at a charging station whereby to provide space above said product into which the blended product can expand during blending.

5. A method according to any one of the preceding claims wherein sealing means (2) for the ingredients is arranged to provide access to the blended contents after the blending operation, by forming an opening in the seal or by removing the seal.

6. A method according to any one of the preceding claims wherein the container and its contents are cooled after charging with ingredients and before transportation in a cooled condition to another location.

7. A method according to any one of claims 1-5 wherein the ingredients are cooled adjacent the dispensing location prior to blending.

8. A method according to claim 7 wherein the ingredients are cooled by placing the container in refrigeration means, or by adding coolant to the ingredients prior to blending.

9. A method according to any one of the preceding claims wherein the container, during a blending operation, is located in an upright or in an inverted position, or in positions intermediate upright and inverted.

10. A container for use in the method of the invention which comprises a nestable vessel (3; 30) having an upper opening (31) through which food product ingredients are chargeable into the vessel, sealing means (2) for sealing said upper opening, the sealing means being removable or openable to access the contents of the container for consumption, said vessel being nestable with a further similar vessel by locating one inside the other through said upper opening, the container having integral blending means (1; 35) including an impeller (1) rotatable within and relative to the container to blend said ingredients within the container, location means (4) for securing the impeller rotatably in the container, drive connection means (4E) associated with the impeller and accessible externally of the container for driving connection with drive means (8) whereby the impeller is rotated, the blending means (1; 35) being permanently united with the container, and the container and the blending means therein being constructed of material, such as plastics, to be readily disposable together after blending and consumption of food product from the container.

11. Container according to claim 10 wherein said vessel is of circular cross-section tapered towards one end whereby to locate and nest two or more vessels inside one another, the narrower end of the vessel being inserted inside the wider upper opening of another vessel to extend adjacent the base thereof.

12. Container according to claim 10 or 11 wherein the sealing means comprises a heat sealable member (2) located over the upper opening, and/or a clip-on lid.

13. Container according to any one of claims 10-12 wherein the sealing means comprises a heat sealable member (2) located over the drive connection means to seal the impeller against the external atmosphere.

14. Container according to any one of claims 11-13 wherein the blending means comprises a shaft (4D) carrying the impeller (4F) towards one end and the drive connection means (4E) towards the other end, the shaft being rotatably journalled with respect to the container.

15. Container according to claim 14 wherein the blending means (1) is a push fit assembly with the container body with catch means to retain the assembly.

16. Container according to claim 14 or 15 comprising bearing surfaces defined between the body of the container and the impeller shaft.

17. Container according to any one of claims 10-16 wherein the blending means is located in the base of the vessel remote from the upper opening.

18. Container according to any one of claims 10-18 wherein the blending means is located on a lid (2) defining a closure means for said upper opening.

19. A container according to any one of claims 10-18 wherein the sealing means for said upper opening defines means for accessing the contents of the container and is removable or has a region which is openable.

20. A container according to any one of claims 10-19 wherein the vessel is constructed to be thin walled, injection moulded plastics and the impeller is wholly of plastics whereby the vessel and the impeller are disposable.

21. Food blending apparatus comprising a container (3; 30) including a nestable vessel having an upper opening (31) through which food product ingredients are chargeable into the vessel, sealing means (2) for sealing said upper opening after charging the vessel against egress and ingress of product and openable to access product, the vessel being nestable with a further similar vessel by locating one inside the other through said upper opening, the container having integral blending means (1; 35) within the container including a rotary impeller for blending the ingredients within the container, location means for securing and uniting the blending means rotatably in the container, drive means (8), drive connection means (4D) associated with the impeller and accessible externally of the container for driving connection with the drive means, mounting means for mounting the container and incorporating the drive means, whereby upon mounting the container on the mounting means in driving connection with the drive means the impeller is rotatable, the mounting means providing a seating for the container during blending, the container and the blending means therein being formed of plastics whereby the container is disposable after use.

22. Blending apparatus according to claim 21 wherein the seating has a portion (20) shaped according to the external shape of the container whereby supporting the side walls of the container during blending.

23. Apparatus according to claim 21 or 22 comprising a support (50) for the upper end of the container during blending which is removably engageable with said upper end.

24. Apparatus according to claim 23 wherein said support incorporates injection means (54) for injecting air, coolant or other additive to the ingredients during blending.

25. Apparatus according to any one of claims 21-24 comprising filling means at a charging location for charging product into the container, cooling means for cooling the container and associated food product, and seal applying means for applying time-sealing means to the upper open end of the container.

26. Apparatus according to any one of claims 21 to 25 wherein the blending means (1; 35) is an assembly with the nestable vessel, the blending means being a push fit into an opening and the inter-engaging surfaces provide the bearing surfaces during rotation of the blending means relative to the vessel.

27. Apparatus according to any one of claims 21 to 26 comprising jug means (70) enclosing the container in a blending position, and coupling means (71) carried by the jug means and for coupling said impeller and said drive means whereby drive is transmitted between the drive means and the impeller during blending.

28. Apparatus according to claim 27 wherein the jug means (70) includes a handle (74) for lifting the jug means, and the jug means has internal dimensions to receive the container as a fit inside the jug means.

29. Apparatus according to claim 27 or 28 wherein the jug means (70) comprises lid means (75) for closing the jug after entry of the container into the jug means.

30. Apparatus according to any one of claims 27 to 29 wherein the coupling means (71) is located in the base of the jug means or in a closure member for the upper end of the jug means.

## Patentansprüche

1. Verfahren zur Ausgabe von gemischten Nahrungsmitteln, wie Milchshakes, in Wegwerfbehältern (3; 30) mit einer integrierten drehenden Mischvorrichtung (1; 35), die sich innerhalb des Behälters befindet, wobei die Mischvorrichtung antreibbar mit einer Antriebsvorrichtung (8; 37; 41) verbindbar ist, die sich außerhalb und getrennt von dem Behälter befindet; wobei der Behälter hergestellt wird, dann mit anderen Behältern ineinandergepackt und zu einem Beladeort transportiert wird; die Behälter wieder auseinandergepackt werden, an dem Beladeort, der von einem Ausgabeort entfernt liegt, mit Nahrungsmittelzutaten-gefüllt werden; der Behälter versiegelt wird, um die Zutaten in dem Behälter zu versiegeln, der Behälter und seine Inhalte mindestens auf eine Serviertemperatur gekühlt werden, die Mischvorrichtung lösbar antreibbar mit der Antriebsvorrichtung an dem Ausgabeort verbunden ist, und die Antriebsvorrichtung betätigt wird, um die Mischvorrichtung zu veranlassen, die Zutaten in dem Behälter zu bearbeiten und zu mischen, Zugriff auf das gemischte Nahrungsmittel in dem Behälter genommen wird, um das gemischte Produkt aus dem Behälter zu konsumieren und den Behälter mit seiner Mischvorrichtung zu beseitigen.

2. Verfahren nach Anspruch 1, bei welchem jeder Behälter ein oberes offenes Ende (31) hat, in das ein anderer Behälter stapelbar angeordnet werden kann und, nachdem die Behälter wieder voneinander getrennt wurden, das offene Ende des Behälters zur Aufnahme der Nahrungsmittelzutaten dient, wobei das offene Ende nach dem Beladen des Behälters mit den Zutaten dicht verschlossen wird.

3. Verfahren nach Anspruch 1 oder 2, bei welchem der Behälter ein unteres Ende hat, in welchem sich die Mischvorrichtung befindet, und der Zugang zu der Mischvorrichtung an dem unteren Ende mit abnehmbaren Dichtungsmitteln (2) verschlossen wird.

4. Verfahren nach einem der vorhergehenden Ansprüche, bei welchem der Behälter an einer Beladestation teilweise mit einem Nahrungsmittel gefüllt wird, wodurch ein Hohlraum über dem Produkt geschaffen wird, in den sich das gemischte Produkt während des Mischens ausdehnen kann.

5. Verfahren nach einem der vorhergehenden Ansprüche, bei welchem Abdichtungsmittel (2) für die Zutaten vorgesehen sind, um nach dem Mischvorgang den Zugang zu dem gemischten Inhalt zu ermöglichen, indem eine Öffnung in der Dichtung gebildet oder die Dichtung entfernt wird.

6. Verfahren nach einem der vorhergehenden Ansprüche, bei welchem der Behälter und seine Inhalte nach dem Beladen mit Zutaten und vor dem Transport in gekühltem Zustand zu einem anderen Ort gekühlt werden.

7. Verfahren nach einem der Ansprüche 1 - 5, bei welchem die Zutaten in der Nähe des Ausgabeorts vor dem Mischen gekühlt werden.

8. Verfahren nach-Anspruch 7, bei welchem die Zutaten gekühlt werden, indem der Behälter in eine Kühleinrichtung gestellt wird, oder indem den Zutaten vor dem Mischen ein Kühlmittel zugegeben wird.

9. Verfahren nach einem der vorhergehenden Ansprüche, bei welchem sich der Behälter während des Mischvorgangs in einer aufrechten oder in einer umgedrehten Lage, oder in Positionen zwischen aufrecht und umgedreht befindet.

10. Behälter für die Verwendung bei dem erfindungsgemäßen Verfahren, der umfasst ein stapelbares Gefäß (3; 30) mit einer oberen Öffnung (31), durch welche Nahrungsmittelzutaten in das Gefäß eingebracht werden können, Abdichtungsmittel (2) zum Verschließen der oberen Öffnung, wobei die Abdichtungsmittel abnehmbar oder öffenbar sind, um zum Konsum des Inhalts des Behälters auf den Inhalt Zugriff zu haben, wobei das Gefäß mit einem weiteren ähnlichen Gefäß stapelbar ist, indem das eine durch die obere Öffnung in das andere gestellt wird, wobei der Behälter eine integrierte Mischvorrichtung (1; 35) aufweist, welche umfasst einen Rührflügel (1), der in und relativ zu dem Behälter drehbar ist, um die Zutaten in dem Behälter zu mischen, eine Positionierungsvorrichtung (4) zur drehbaren Befestigung des Rührflügels in dem Behälter, Antriebsverbindungsmittel (4E), die dem Rührflügel zugeordnet sind und von außerhalb des Behälters zur Antriebsverbindung mit der Antriebsvorrichtung (8) zugänglich sind, wobei der Rührflügel gedreht wird und die Mischvorrichtung (1; 35) dauernd mit dem Behälter vereint ist und der Behälter und die Mischvorrichtung darin aus einem Material wie Kunststoff hergestellt sind, um nach dem Mischen und dem Verzehr des Nahrungsmittels aus dem Behälter gemeinsam leicht entsorgt werden zu können.

11. Behälter nach Anspruch 10, bei welchem das Gefäß einen kreisförmigen Querschnitt hat, der sich zu einem Ende hin verjüngt, wodurch zwei oder mehr Gefäße ineinander gestellt und gestapelt werden können, wobei das engere Ende des Gefäßes in die weitere obere Öffnung des anderen Gefäßes eingeführt wird, um sich in die Nähe von dessen Boden zu erstrecken.

12. Behälter nach Anspruch 10 oder 11, bei welchem die Abdichtungsmittel ein durch Erhitzen verschließbares Element (2), das über der oberen Öffnung angeordnet ist, und/oder einen einrastbaren Deckel umfassen.

13. Behälter nach einem der Ansprüche 10 - 12, bei welchem die Abdichtungsmittel ein durch Erhitzen verschließbares Element (2) umfassen, das über den Antriebsverbindungsmitteln angeordnet ist, um den Rührflügel gegen die Außenumgebung zu verschließen.

14. Behälter nach einem der Ansprüche 11 - 13, bei welchem die Mischvorrichtung eine Welle (4D) umfasst, die an einem Ende den Rührflügel (4F) und am anderen Ende die Antriebsverbindungsmittel (4E) trägt, wobei die Welle in Bezug auf den Behälter drehbar gelagert ist.

15. Behälter nach Anspruch 14, bei welchem die Mischvorrichtung (1) eine Druckeinpassvorrichtung mit dem Behälterkörper bildet, mit Halteelementen, um die Vorrichtung zusammenzuhalten.

16. Behälter nach Anspruch 14 oder 15, umfassend Lagerflächen, die zwischen dem Behälterkörper und der Rührflügelwelle definiert sind.

17. Behälter nach einem der Ansprüche 10 - 16, bei welchem die Mischvorrichtung am Boden des Gefäßes im Abstand von der oberen Öffnung angeordnet ist.

18. Behälter nach einem der Ansprüche 10 - 18, bei welchem die Mischvorrichtung an einem Deckel (2) angeordnet ist, der ein Verschlusselement für die obere Öffnung darstellt.

19. Behälter nach einem der Ansprüche 10 - 18, bei welchem die Abdichtungsmittel für die obere Öffnung Mittel für den Zugriff auf die Inhalte des Behälters darstellen und abnehmbar sind oder einen Bereich aufweisen, der geöffnet werden kann.

20. Behälter nach einem der Ansprüche 10 bis 19, bei welchem das Gefäß dünnwandig ausgebildet ist, aus Spritzgusskunststoff besteht und bei welchem der Rührflügel ganz aus Plastik besteht, wodurch das Gefäß und der Rührflügel Wegwerfartikel sind.

21. Nahrungsmittelmischgerät, umfassend einen Behälter (3; 30) mit einem stapelbaren Gefäß, das eine obere Öffnung (31) aufweist, durch welche Nahrungsmittelzutaten in das Gefäß eingegeben werden können, Abdichtungsmittel (2) zum Abdichten der oberen Öffnung nach dem Beladen des Gefäßes gegen das Austreten und Eindringen des Produkts, die öffenbar sind für den Zugriff auf das Produkt, wobei das Gefäß mit einem weiteren ähnlichen Gefäß stapelbar ist, indem eines durch die obere Öffnung in das andere gesetzt wird, und wobei der Behälter eine integrierte Mischvorrichtung (1; 35) in dem Behälter aufweist, die einen drehbaren Rührflügel zum Mischen der Zutaten in dem Behälter umfasst, Positionsmittel zur drehbaren Befestigung und Vereinigung der Mischvorrichtung mit dem Behälter, Antriebsmittel (8), Antriebsverbindungsmittel (4D), die dem Rührflügel zugeordnet sind und von außerhalb des Behälters für die Antriebsverbindung mit den Antriebsmitteln zugänglich sind, Befestigungsmittel zur Befestigung des Behälters und Aufnahme der Antriebsmittel, wodurch beim Befestigen des Behälters an den Befestigungsmitteln in Antriebsverbindung mit den Antriebsmitteln der Rührflügel drehbar ist, wobei die Befestigungsmittel eine Auflagefläche für den Behälter während des Mischens schaffen, und wobei der Behälter und die Mischvorrichtung darin aus Kunststoff bestehen, wodurch der Behälter nach Gebrauch weggeworfen werden kann.

22. Mischgerät nach Anspruch 21, bei welchem die Auflagefläche einen Bereich (20) aufweist, der entsprechend der äußeren Form des Behälters geformt ist, wodurch er die Seitenwände des Behälters während des Mischens stützt.

23. Gerät nach Anspruch 21 oder 22, umfassend eine Stütze (50) für das obere Ende des Behälters während des Mischens, die abnehmbar in das obere Ende eingreifbar ist.

24. Gerät nach Anspruch 23, bei welchem die Stütze eine Einspritzvorrichtung (54) zum Einspritzen von Luft, eines Kühlmittels oder anderen Zusatzes zu den Zutaten während des Mischens einschließt.

25. Gerät nach einem der Ansprüche 21 - 24, umfassend eine Auffüllvorrichtung an einem Beladeort zum Eingeben von Produkten in den Behälter, eine Kühlvorrichtung zum Kühlen des Behälters und des zugeordneten Nahrungsmittels, und eine Vorrichtung zum Aufbringen einer Abdichtung zum Aufbringen vorübergehender Abdichtungsmittel auf das obere Ende des Behälters.

26. Gerät nach einem der Ansprüche 21 - 25, bei welchem die Mischvorrichtung (1; 35) eine Einheit mit dem stapelbaren Gefäß ist, wobei die Mischvorrichtung eine Druckeinpassung in einer Öffnung ist und die ineinander eingreifenden Flächen Auflageflächen während der Rotation der Mischvorrichtung relativ zum Gefäß schaffen.

27. Gerät nach einem der Ansprüche 21 - 26, umfassend einen Krug (70), der den Behälter in der Mischposition umgibt, und Verbindungsmittel (71), die von dem Krug gehalten werden, zur Kupplung des Rührflügels und der Antriebsmittel, wodurch der Antrieb zwischen den Antriebsmitteln und dem Rührflügel während des Mischens übertragen wird.

28. Gerät nach Anspruch 27, bei welchem der Krug (70) einen Griff (74) zum Anheben des Krugs aufweist und der Krug solche Innenabmessungen hat, dass er den Behälter passend in den Krug aufnimmt.

29. Gerät nach Anspruch 27 oder 28, bei welchem der Krug (70) einen Deckel (75) zum Schließen des Krugs umfasst, wenn der Behälter in den Krug eingesetzt ist.

30. Gerät nach einem der Ansprüche 27 - 29, bei welchem die Verbindungsmittel (71) sich am Boden des Krugs oder in einem Verschlusselement für das obere Ende des Krugs befinden.

## Revendications

1. Un procédé pour distribuer des produits alimentaires mélangés, comme des milk-shakes, dans des conteneurs jetables (3, 30) ayant un moyen de mélange rotatif solidaire (1, 35) disposé à l'intérieur du conteneur, lequel moyen de mélange est apte à être relié de façon commandée à un moyen d'entraînement (8, 37, 41) situé extérieurement et séparé du conteneur, dans lequel le conteneur est réalisé, puis emboîté avec d'autres conteneurs et transporté vers un poste de chargement, les conteneurs sont désemboîtés, chargés avec des ingrédients de produits au poste de chargement éloigné du poste de distribution, le conteneur est étanchéifié pour étanchéifier les ingrédients dans le conteneur, le conteneur et son contenu sont refroidis à au moins une température de service, le moyen de mélange est relié de façon commandée dégageable audit moyen d'entraînement au poste de distribution et le moyen d'entraînement est actionné pour provoquer que le moyen de mélange fonctionne et mélange les ingrédients dans le conteneur, un accès est fourni au produit alimentaire mélangé dans le conteneur afin de consommer ledit produit mélangé à partir du conteneur et le conteneur avec son moyen de mélange est jeté.

2. Un procédé selon la revendication 1, dans lequel chaque conteneur présente une extrémité ouverte supérieure (31) dans laquelle un autre conteneur est apte à être logé de manière emboîtable et, après le désemboîtement des conteneurs, l'extrémité ouverte du conteneur agit pour recevoir les ingrédients de produits, ladite extrémité ouverte étant fermée de façon étanche après le chargement du conteneur avec lesdits ingrédients.

3. Un procédé selon la revendication 1 ou 2, dans lequel le conteneur présente une extrémité inférieure dans laquelle le moyen de mélange est situé et l'accès au moyen de mélange est étanchéifié à ladite extrémité inférieure avec un moyen d'étanchéité amovible (2).

4. Un procédé selon l'une quelconque des revendications précédentes, dans lequel le conteneur est partiellement rempli avec un produit alimentaire à un poste de chargement afin de fournir un espace au-dessus dudit produit dans lequel le produit mélangé peut se dilater pendant le mélange.

5. Un procédé selon l'une quelconque des revendications précédentes, dans lequel le moyen d'étanchéité (2) pour les ingrédients est agencé pour fournir un accès au contenu mélangé après l'opération de mélange en formant une ouverture dans l'étanchéité ou en retirant l'étanchéité.

6. Un procédé selon l'une quelconque des revendications précédentes, dans lequel le conteneur et son contenu sont refroidis après le chargement avec des ingrédients et avant le transport dans une condition refroidie vers un autre poste.

7. Un procédé selon l'une quelconque des revendications 1 à 5, dans lequel les ingrédients sont refroidis près du poste de distribution avant le mélange.

8. Un procédé selon la revendication 7, dans lequel les ingrédients sont refroidis en plaçant le conteneur dans un moyen de réfrigération ou en ajoutant un agent de refroidissement aux ingrédients avant le mélange.

9. Un procédé selon l'une quelconque des revendications précédentes, dans lequel le conteneur, pendant une opération de mélange, est disposé dans une position verticale ou dans une position inversée ou dans des positions verticales et inversées intermédiaires.

10. Un conteneur destiné à être utilisé dans le procédé de l'invention qui comprend un récipient emboîtable (3, 30) ayant une ouverture supérieure (31) à partir de laquelle les ingrédients de produits alimentaires sont aptes à être chargés dans le récipient, un moyen d'étanchéité (2) pour étanchéifier ladite ouverture supérieure, le moyen d'étanchéité étant amovible ou apte à être ouvert pour accéder au contenu du récipient pour la consommation, ledit récipient étant apte à être emboîté avec un autre récipient analogue en le disposant à l'intérieur de l'autre par l'intermédiaire de ladite ouverture supérieure, le conteneur ayant un moyen de mélange solidaire (1, 35) comprenant un agitateur (1) apte à tourner à l'intérieur et par rapport au conteneur pour mélanger lesdits ingrédients dans le conteneur, un moyen d'emplacement (4) pour fixer l'agitateur de façon rotative dans le conteneur, un moyen de liaison d'entraînement (4E) associé à l'agitateur et accessible extérieurement du conteneur pour une liaison d'entraînement avec un moyen d'entraînement (8), si bien que l'agitateur tourne, le moyen de mélange (1, 35) étant réuni de façon permanente au conteneur et le conteneur et le moyen de mélange dans celui-ci étant réalisés en un matériau comme des matières plastiques, pour être facilement jetables après le mélange et la consommation du produit alimentaire à partir du conteneur.

11. Un conteneur selon la revendication 10, dans lequel ledit récipient est de section transversale circulaire, effilé vers une extrémité afin de disposer et d'emboîter deux ou plusieurs récipients à l'intérieur l'un de l'autre, l'extrémité la plus étroite du récipient étant insérée à l'intérieur de l'ouverture supérieure la plus large de l'autre récipient pour s'étendre près de sa base.

12. Un conteneur selon la revendication 10 ou 11, dans lequel le moyen d'étanchéité comprend un élément apte à être étanchéifié à la chaleur (2) situé sur l'ouverture supérieure et/ou une agrafe sur le couvercle.

13. Un conteneur selon l'une quelconque des revendications 10 à 12, dans lequel le moyen d'étanchéité comprend un élément apte à être étanchéifié à la chaleur (2) situé sur le moyen de liaison d'entraînement pour étanchéifier l'agitateur vis-à-vis de l'atmosphère externe.

14. Un conteneur selon l'une quelconque des revendications 11 à 13, dans lequel le moyen de mélange comprend un arbre (4D) portant l'agitateur (4F) vers une extrémité et le moyen de liaison d'entraînement (4E) vers l'autre extrémité, l'arbre étant monté à rotation par rapport au conteneur.

15. Un conteneur selon la revendication 14, dans lequel le moyen de mélange (1) est un ensemble à adaptation par poussée avec le corps de conteneur, avec des moyens de prise pour retenir l'ensemble.

16. Un conteneur selon la revendication 14 ou 15, comprenant des surfaces de support définies entre le corps du conteneur et l'arbre d'agitateur.

17. Un conteneur selon l'une quelconque des revendications 10 à 16, dans lequel le moyen de mélange est situé à la base du récipient éloigné de l'ouverture supérieure.

18. Un conteneur selon l'une quelconque des revendications 10 à 18, dans lequel le moyen de mélange est situé sur un couvercle (2) définissant un moyen de fermeture pour ladite ouverture supérieure.

19. Un conteneur selon l'une quelconque des revendications 10 à 18, dans lequel le moyen d'étanchéité pour ladite ouverture supérieure définit un moyen pour l'accès au contenu du conteneur et est apte à être retiré ou a une région qui est apte à être ouverte.

20. Un conteneur selon l'une quelconque des revendications 10 à 19, dans lequel le récipient est réalisé pour être en matière plastique moulée par injection, à parois minces, et l'agitateur est entièrement en matière plastique, si bien que le récipient et l'agitateur sont jetables.

21. Appareil de mélange de produits alimentaires comprenant un conteneur (3, 30) comportant un récipient apte à être emboîté, ayant une ouverture supérieure (31) à travers laquelle les ingrédients de produits alimentaires sont aptes à être chargés dans le récipient, un moyen d'étanchéité (2) pour étanchéifier ladite ouverture supérieure après le chargement du récipient vis-à-vis de la sortie et de l'entrée de produit et apte à être ouvert pour accéder au produit, le récipient étant apte à être emboîté avec un autre récipient analogue en disposant un récipient dans l'autre par l'intermédiaire de ladite ouverture supérieure, le conteneur ayant un moyen de mélange solidaire (1, 35) dans le conteneur comprenant un agitateur rotatif pour mélanger les ingrédients dans le conteneur, un moyen de localisation pour fixer et réunir le moyen de mélange de manière rotative dans le conteneur, un moyen d'entraînement (8), un moyen de liaison d'entraînement (4D) associé à l'agitateur et accessible extérieurement du conteneur pour la liaison d'entraînement avec le moyen d'entraînement, un moyen de montage pour monter le conteneur et incorporer le moyen d'entraînement, si bien que, lors du montage du conteneur sur le moyen de montage dans la liaison d'entraînement avec le moyen d'entraînement, l'agitateur est apte à tourner, le moyen de montage fournissant un siège pour le conteneur pendant le mélange, le conteneur et le moyen de mélange étant formés de matières plastiques, si bien que le conteneur est jetable après utilisation.

22. Appareil de mélange selon la revendication 21, dans lequel le siège présente une partie (20) conformée selon la forme externe du conteneur afin de supporter les parois latérales du conteneur pendant le mélange.

23. Appareil selon la revendication 21 ou 22, comprenant un support (50) pour l'extrémité supérieure du conteneur pendant le mélange qui est apte à être mis en prise de façon amovible avec ladite extrémité supérieure.

24. Appareil selon la revendication 23, dans lequel ledit support comprend un moyen d'injection (54) pour injecter de l'air, un agent de refroidissement ou un autre additif aux ingrédients pendant le mélange.

25. Appareil selon l'une quelconque des revendications 21 à 24, comprenant un moyen de remplissage à un poste de chargement pour charger le produit dans le conteneur, un moyen de refroidissement pour refroidir le conteneur et le produit alimentaire associé et un moyen d'application d'étanchéité pour appliquer un moyen d'étanchéité dans le temps à l'extrémité ouverte supérieure du conteneur.

26. Appareil selon l'une quelconque des revendications 21 à 25, dans lequel le moyen de mélange (1, 35) est un ensemble avec le récipient apte à être emboîté, le moyen de mélange étant un dispositif à adaptation par poussée dans une ouverture et les surfaces de prise mutuelle fournissent les surfaces de support pendant la rotation du moyen de mélange par rapport au récipient.

27. Appareil selon l'une quelconque des revendications 21 à 26, comprenant un réceptacle (70) entourant le conteneur dans une position de mélange et un moyen de couplage (71) porté par le réceptacle et pour coupler ledit agitateur et ledit moyen d'entraînement, si bien que l'entraînement est transmis entre le moyen d'entraînement et l'agitateur pendant le mélange.

28. Appareil selon la revendication 27, dans lequel le réceptacle (70) comprend une poignée (74) pour son élévation et le réceptacle présente des dimensions internes afin de recevoir le conteneur comme un moyen d'adaptation interne.

29. Appareil selon la revendication 27 ou 28, dans lequel le réceptacle (70) comprend un couvercle (75) pour le fermer après l'entrée du conteneur dans le réceptacle.

30. Appareil selon l'une quelconque des revendications 27 à 29, dans lequel le moyen de couplage (71) est situé à la base du réceptacle ou dans un élément de fermeture pour l'extrémité supérieure du réceptacle.
